(19) Europäisches Patentamt
European Patent Office
Office européen des brevets

(11) **EP 3 298 359 B1**

(12) **EUROPÄISCHE PATENTSCHRIFT**

(45) Veröffentlichungstag und Bekanntmachung des Hinweises auf die Patenterteilung:
**22.06.2022 Patentblatt 2022/25**

(21) Anmeldenummer: **16718683.2**

(22) Anmeldetag: **26.04.2016**

(51) Internationale Patentklassifikation (IPC):
*G01F 1/66* *(2022.01)*    *G01F 1/667* *(2022.01)*
*G01F 15/02* *(2006.01)*    *G01F 25/10* *(2022.01)*
*G01N 29/12* *(2006.01)*    *G01N 29/44* *(2006.01)*

(52) Gemeinsame Patentklassifikation (CPC):
**G01F 1/662; G01F 1/667; G01F 15/024;
G01F 25/10; G01N 29/12; G01N 29/4472**

(86) Internationale Anmeldenummer:
**PCT/EP2016/059308**

(87) Internationale Veröffentlichungsnummer:
**WO 2016/184647 (24.11.2016 Gazette 2016/47)**

(54) **VERFAHREN ZUR ERMITTLUNG EINER ROHRWANDRESONANZFREQUENZ, SOWIE CLAMP-ON-ULTRASCHALL-DURCHFLUSSMESSGERÄT**

METHOD FOR DETERMINING A PIPE WALL RESONANCE FREQUENCY, AND CLAMP-ON-ULTRASONIC FLOWMETER

PROCÉDÉ DE DÉTERMINATION D'UNE FRÉQUENCE DE RÉSONANCE DE LA PAROI D'UNE CONDUITE, ET DÉBITMÈTRE ULTRASONORE SERRE-TUBE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2015 DE 102015107752**

(43) Veröffentlichungstag der Anmeldung:
**28.03.2018 Patentblatt 2018/13**

(73) Patentinhaber: **Endress+Hauser Flowtec AG**
**4153 Reinach (CH)**

(72) Erfinder:
• **PLOß, Peter**
**95445 Bayreuth (DE)**
• **RUPITSCH, Stefan J.**
**90461 Nürnberg (DE)**
• **BEZDEK, Michal**
**4147 Aesch (CH)**
• **FRÖHLICH, Thomas**
**4142 Münchenstein (CH)**
• **KISSLING, Beat**
**4153 Reinach (CH)**

(74) Vertreter: **Andres, Angelika Maria
Endress+Hauser Group Services
(Deutschland) AG+Co. KG
Colmarer Straße 6
79576 Weil am Rhein (DE)**

(56) Entgegenhaltungen:
**DE-A1- 19 818 053     US-A1- 2012 055 264**

**Beschreibung**

Die vorliegende Erfindung betrifft ein Verfahren zur Ermittlung zumindest einer Rohrwandresonanzfrequenz, sowie ein Clamp-On-Ultraschall-Durchflussmessgerät, ein Verfahren zur Ermittlung eines Durchflusses und/oder einer Durchflussgeschwindigkeit, ein Verfahren zur Ermittlung von Veränderungen einer Messstelle und ein Rohr-Identifikationsgerät.

Clamp-On-Ultraschall-Durchflussmessgeräte sind seit langem bekannt. Sie können nach dem Dopplerprinzip oder nach dem Laufzeitdifferenzprinzip betrieben werden. Üblicherweise werden die Ultraschallwandler, auch Ultraschall-Transducer genannt, der Clamp-On-Ultraschall-Durchflussmessgeräte von außen an eine bestehende Rohrleitung aufgesetzt und festgeschnallt oder anderweitig an der Rohrleitung festgelegt. Eine Installation des Durchflussmessgerätes kann somit ohne Unterbrechung des Durchflusses in der Rohrleitung erfolgen.

Die DE 1981 8053 A1 offenbart ein Ultraschall-Durchflussmessgerät und ein Verfahren, das eine genaue Bestimmung der Ankunftszeit von Ultraschall-Impulsen in einem Strömungsmedium gewährleistet, indem es die Signale, die nach der Übertragung sowohl in Strömungsaufwärtsals auch Strömungsabwärtsrichtung durch das Strömungsmedium an dem Empfangswandler empfangen werden, die gleiche relative Beziehung zuweist. Dadurch kann eine genauere Strömungsmessung realisiert werden.

Eine wesentliche Messunsicherheit bei Clamp-On Durchflussmessgeräten ist jedoch die Rohrleitung und deren unbekannte Parameter. So ist der Innendurchmesser der Rohrleitung nur als Durchschnittswert bekannt, er kann jedoch an der Messstelle erheblich vom Durchschnitt abweichen.

Durch US 2012 0055 264 A1 ist eine Methode bekannt, die mit Zuhilfenahme einer Rohrleitungsfrequenz die Dicke der Rohrleitung ermittelt, jedoch keine weiteren Informationen bzgl. weiterer Rohrleitungsparameter liefert, aus denen eine Korrektur des Durchflusses durchgeführt werden kann.

Auch die schalldämpfenden Eigenschaften der unterschiedlichen Wandungsmaterialien der Rohrleitung, sowie Innenbelag oder Hydroabrasion können die Genauigkeit der Durchflussmessung beeinflussen. Bislang ist für diese messstellenspezifische Fehlerquelle keine geeignete Kompensation bekannt.

Ausgehend von dieser Vorbetrachtung ist es nunmehr Aufgabe der vorliegenden Erfindung ein Verfahren bereitzustellen, um eine genauere Durchflussmessung, insbesondere für Clamp-On-Ultraschall-Durchflussmessgeräte, zu gewährleisten.

Die vorliegende Erfindung löst diese Aufgabe durch ein Verfahren mit den Merkmalen des Anspruchs 1 oder 13.

Darüber hinaus ermöglicht die Erfindung das Bereitstellen eines geeigneten Clamp-On Durchflussmessgerätes und eines Rohrwand-Identifikationsgerät, mit welchem Rohrleitungsparameter ermittelbar sind.

Es hat sich gezeigt, dass durch Ermittlung einer oder mehrerer Rohrwandresonanzfrequenzen eine Korrektur des gemessenen Durchflusses und/oder einer gemessenen Durchflussgeschwindigkeit erfolgen kann.

Ein erfindungsgemäßes Verfahren zur Ermittlung zumindest einer Rohrwandresonanzfrequenz $f_{res}$ einer Rohrleitung im Bereich einer Messstelle erfolgt mittels eines Feldgerätes der Prozessmesstechnik mit zumindest einem ersten Ultraschallwandler, welcher an der Messstelle an der Rohrleitung angebracht ist und umfasst die folgenden Schritte:

Erfassen eines Empfangsspektrums $U_{rec}(f)$ aus einem Empfangssignal $u_{rec}(t)$ nach dem Aussenden eines Ultraschallsignals;
Ermittlung einer zweiten Übertragungsfunktion aus einer ersten Übertragungsfunktion des ersten oder der mehreren Ultraschallwandler und dem Empfangsspektrum, wobei die zweite Übertragungsfunktion charakteristisch für die Messstelle ist; und
Ermittlung der Rohrwandresonanzfrequenzen im Bereich der Messstelle durch Auswertung der Übertragungsfunktion.

Die vorgenannten Übertragungsfunktionen als auch das Empfangssignal können als Amplitudenspektren, z. B. Schallpegel in Dezibel als Funktion einer Frequenz, dargestellt werden.

Die Übertragungsfunktion, die charakteristisch für die Messstelle ist, ist im Wesentlichen durch das Schallübertragungsverhalten der Rohrleitung bestimmt, einschließlich von anhaftendem Belag oder ähnlichem. In die Übertragungsfunktion kann allerdings auch im Fall von schalldämpfenden Medien das Übertragungsverhalten des Messmediums mit eingehen.

Das Erfassen eines Empfangsspektrums $U_{rec}(f)$ aus einem Empfangssignal $u_{rec}(t)$ erfolgt nach dem Aussenden eines Ultraschallsignals. Dabei wird ein Zeitsignal $u_{rec}(t)$ gemessen und davon dann das komplexwertige Spektrum $U_{rec}(f)$ in Form einer Übertragungsfunktion berechnet.

Die ermittelten Rohrwandresonanzfrequenzen können insbesondere, jedoch nicht ausschließlich, zur Korrektur eines ermittelten Durchflusses und/oder einer ermittelten Durchflussgeschwindigkeit genutzt werden und/oder zu anderen Auswertungen, z.B. zur Vorhersage einer günstigen Messstelle, zur Wartung und/oder Selbstkalibration des Ultraschall-Durchflussmessgerätes und dergleichen.

Vorteilhafte Ausgestaltungen der Erfindung sind Gegenstand der Unteransprüche.

Ein Bereitstellen der Übertragungsfunktion beschreibt vorteilhaft eine Änderung eines akustischen Pegels an einer Koppelfläche des ersten Ultraschallwandlers mit der Rohrleitung in Abhängigkeit zu einer bestimmten Frequenz der Eingangsspannung mit welcher ein schallerzeugendes Element des Ultraschallwandlers betrieben wird

Es ist von Vorteil, wenn das Feldgerät der Prozessmesstechnik zumindest einen Datenspeicher aufweist und die Übertragungsfunktion des ersten oder der mehreren Ultraschallwandler abrufbar auf dem Datenspeicher hinterlegt ist.

Es ist zudem von Vorteil, wenn ein Bereitstellen der Übertragungsfunktion von zwei Ultraschallwandlern durch Ermittlung einer Gesamtübertragungsfunktion erfolgt, indem die Ultraschallwandler an ihren Kopplungsflächen miteinander verbunden werden. Die Gesamtübertragungsfunktion beschreibt somit die Propagation des Schallsignals durch den ersten und den zweiten Ultraschallwandler.

Dies kann entweder auf einem Datenspeicher hinterlegt werden oder aber vor Ort, also während der Installation als Teilschritt vor der Montage auf dem Rohr ermittelt, insbesondere gemessen, werden.

Zur Ermittlung des Empfangsspektrums kann vorteilhaft

ein Aussenden eines Ultraschallsignals durch ein schallerzeugendes Element des ersten Ultraschallwandlers erfolgen,

wobei das Signal zumindest durch den Ultraschallwandler, zumindest zweimal durch eine Rohrwandung der Rohrleitung, durch das Messmedium und ein zweites Mal durch den ersten oder durch einen zweiten Ultraschallwandler propagiert, und durch das schallerzeugende Element des ersten Ultraschallwandlers oder durch ein schallerzeugendes Element des zweiten Ultraschallwandlers als Empfangssignals empfangen und in ein Empfangsspektrum umgewandelt wird.

Alternativ oder zusätzlich kann das Ermitteln des Empfangsspektrums vorteilhaft durch

ein Aussenden eines Ultraschallsignals durch ein schallerzeugendes Element des ersten Ultraschallwandlers erfolgen,

wobei das Signal ausschließlich durch den Ultraschallwandler, durch eine Rohrwandung der Rohrleitung und durch einen zweiten Ultraschallwandler propagiert, und durch ein schallerzeugendes Element eines zweiten Ultraschallwandlers als Empfangssignals empfangen und in ein Empfangsspektrum umgewandelt wird.

Die Ermittlung einer Übertragungsfunktion, die charakteristisch für die Messstelle ist, kann vorteilhaft durch Subtraktion der logarithmierten Amplitudenspektren der Übertragungsfunktion zumindest des ersten oder mehrerer im Bereich der Messstelle befindlichen Ultraschallwandler und des Empfangsspektrums erfolgen.

Es ist zudem von Vorteil, wenn die Ermittlung der Rohrwandresonanzfrequenzen im Bereich der Messstelle durch Ermittlung der Amplitudenmaxima des Amplitudenspektrums der Übertragungsfunktion erfolgt.

Ein erfindungsgemäßes Clamp-On-Ultraschall-Durchflussmessgerät umfasst zumindest den ersten Ultraschallwandler und eine Auswerteeinheit, an welcher der erste Ultraschallwandler angeschlossen ist und welche ausgebildet ist das erfindungsgemäße Verfahrens zu betreiben.

Es ist von Vorteil, wenn die Auswerteeinheit ausgerüstet ist zum Ermittlung des Durchflusses und/oder der Durchflussgeschwindigkeit nach dem Laufzeitdifferenzverfahren.

Es ist von Vorteil, wenn die Auswerteeinheit ausgerüstet ist, basierend auf der zumindest einen Rohrwandresonanzfrequenz ein Anregungssignal für den ersten Ultraschallwandler, vorzugsweise jedoch eine Frequenz des Anregungssignals, einzustellen.

Weiterhin erfindungsgemäß ist ein Verfahren zur Ermittlung eines Durchflusses oder der Durchflussgeschwindigkeit durch ein Clamp-On-Ultraschall-Durchflussmessgerät, wobei Rohrwandresonanzfrequenzen bei der Ermittlung des Durchflusses berücksichtigt werden, und wobei die Rohrwandresonanzfrequenzen nach dem erfindungsgemäßen Verfahren ermittelt wurden.

Erfindungsgemäß ist zudem ein Verfahren zur Ermittlung von Veränderungen einer Messstelle, an welcher ein Clamp-On Durchflussmessgerät festgelegt ist, wobei eine Veränderung der Messstelle angezeigt wird, sofern die ermittelte Rohrwandresonanzfrequenz oder die Rohrwandresonanzfrequenzen einen Sollwert überschreiten, wobei die Rohrwandresonanzfrequenzen nach dem erfindungsgemäßen Verfahren ermittelt wurden.

Ein erfindungsgemäßes Rohr-Identifikationsgerät zur Ermittlung von Rohrwandparametern, insbesondere der Rohrwanddicke und des Rohrwandmaterials, weist zumindest einen Ultraschallwandler auf und eine Auswerteeinheit, welche eingerichtet ist das erfindungsgemäße Verfahren auszuführen und aus den ermittelten Rohrwandresonanzfrequenzen die Rohrwandstärke und/oder das Rohrwandmaterial zu ermitteln.

Nachfolgend wird die Erfindung anhand eines Ausführungsbeispiels und anhand der beigefügten Figuren näher erläutert. Es zeigen:

Fig. 1    schematische Darstellung eines sogenannten Clamp-On-Ultraschall-Durchflussmessgerätes;

Fig. 2    exemplarisches Diagramm einer frequenzabhängigen Messabweichung;

Fig. 3    Diagramm eines Amplitudenspektrums eines Empfangssignals und einer Übertragungsfunktion eines ausgewählten Ultraschallwandlers; und

Fig. 4    ermittelte Übertragungsfunktion der Rohrwand und daraus ermittelte Rohrwandresonanzfrequenzen.

Clamp-On-Ultraschall-Durchflussmessgeräte sind an sich bekannt. Diese Messgeräte können entweder die Durchflussbestimmung anhand des Laufzeitdifferenz-Prinzips ermittelt werden oder nach dem Doppler-Prinzip ermittelt werden. Die Bestimmung mittels des Doppler-Prinzips kann bereits mit einem Ultraschallwandler durchgeführt werden, beim Laufzeitdifferenz-Prinzip werden bekanntermaßen zumindest zwei Ultraschallwandler eingesetzt.

Bei der Durchflussmessung werden Anregungssignale mit einer gewissen Anregungsfrequenz erzeugt. Diese Anregungsfrequenz wird zumeist aus einem vorgegebenen Frequenzbereich durch das Durchflussmessgerät selbst bestimmt und liegt oftmals im Bereich der Mittenfrequenz der verwendeten Ultraschallwandler.

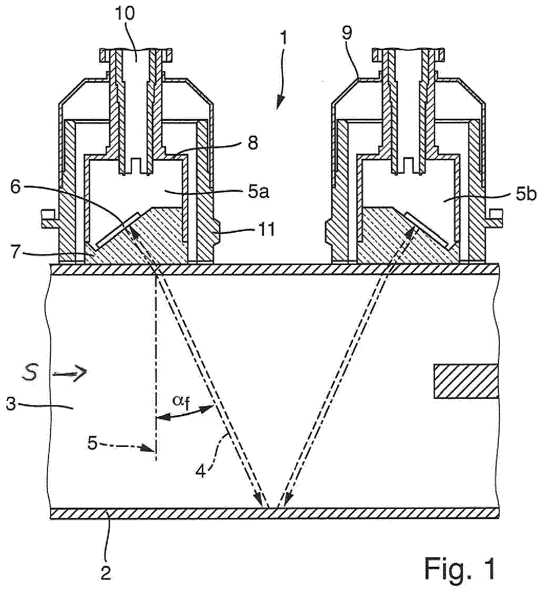

Fig. 1 zeigt eine Anordnung mit einem Clamp-On-Ultraschall-Durchflussmessgerät 1 im installierten Zustand an einer Rohrleitung 2. In der Rohrleitung 2 befindet sich ein Messmedium 3, welches idealerweise die Rohrleitung 2 in Strömungsrichtung S durchfließt.

Das schematisch dargestellte Clamp-On-Ultraschall-Durchflussmessgerät 1 besteht vorzugsweise aus zwei Ultraschallwandlern 5a und 5b welche von außen auf das Messrohr aufgesetzt sind und lösbar oder unlösbar mit der Rohrleitung 2 verbunden sind. In der dargestellten Variante handelt es sich um eine sogenannte Zwei-Traversen-Anordnung, es sind allerdings auch andere Anordnungen, so z.B. eine Ein-Traversen-Anordnung, denkbar.

Der in Fig. 1 dargestellte Ultraschallwandler 5a ist mittels eines Halteelements 11 zur Festlegung des Ultraschallwandlers 5a an der Rohrleitung 2 angebracht. Das Halteelement 11 und der Ultraschallwandler 5a sind Teil einer Ultraschallwandler-Anordnung. Der Ultraschallwandler 5a weist ein Gehäuse 9 auf und welches mit dem Halteelement 11 verbindbar, so z.B. verklemm- oder verrastbar ist.

Ein entsprechender Ultraschallwandler 5a weist ein elektromechanisches Wandlerelement 6, z.B. ein Piezoelement, auf. Dieses ist über eine elektrische Verbindung, z.B. ein Kabel, mit einer nicht näher dargestellten Auswerteeinheit verbunden. Die entsprechende Verbindung ist dabei z.B. durch eine zylindrische Kabelführung 10 mit einer Längsachse senkrecht zur Rohrleitung 2 vom elektromechanischen Wandlerelement 6 weggeführt.

Der Ultraschallwandler 5a weist zudem zwischen dem elektromechanischen Wandlerelement 6 und der Rohrleitung 2 einen Koppelkörper 7 auf, welcher eine Auflagefläche zum Messrohr hin umfasst und eine gegenüber dieser Auflagefläche gekippte Fläche zur Anordnung des elektromechanischen Wandlerelements 6 aufweist.

Das Clamp-On-Ultraschall-Durchflussmessgerät, insbesondere das elektromechanische Wandlerelement 6 des Ultraschallwandlers 5a, sendet zur Ermittlung eines Durchflusses oder einer Durchflussgeschwindigkeit während der Messung ein Ultraschallsignal mit dominanter Sendefrequenz $f_{ex}$ aus, welches durch den Ultraschallwandler 5b empfangen wird.

Die Messung erfolgt nach dem Laufzeitdifferenzprinzip. Daher werden Ultraschallsignale einmal schräg in und einmal schräg entgegen der Strömungsrichtung S ausgesandt und empfangen.

Bei der Wahl der Anregungsfrequenz $f_{ex}$ des elektromagnetischen Wandlerelements 6 ist es bekannt sich an der Mittenfrequenz des Wandlerelements 6 zu orientieren.

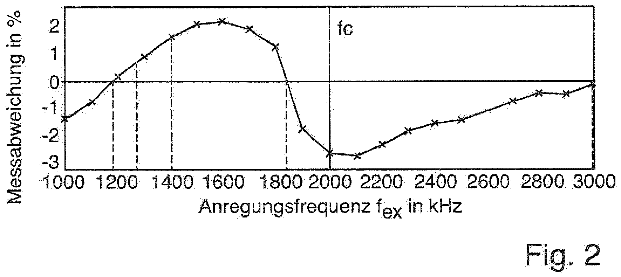

Es hat sich allerdings gezeigt, dass bei der Auswahl der Mittenfrequenz als Anregungsfrequenz nicht immer die optimale Wahl für den Betrieb eines Ultraschall-Durchflussmessgerätes ist. Fig. 2 zeigt eine Darstellung wie sich die Messabweichung im Frequenzbereich eines Ultraschallwandlers ändert. Diese Kurve wurde auf einer Rundlaufanlage bei einem Volumenstrom von 20l/s ermittelt. Die beiden Ultraschallwandler des Clamp-On Systems sind an einem DN80 Rohr aus Stahl mit einer Rohrwandstärke von 2 mm befestigt. Die Mittenfrequenz $f_c$ beträgt 2 MHz. Wie man erkennt, ist die relative Messabweichung im Bereich der Mittenfrequenz bei dieser Anordnung relativ hoch.

Es hat sich gezeigt dass die Rohrwand der jeweiligen Rohrleitung einen Einfluss auf den Messfehler hat. Selbst bei Rohrwänden aus identischem Material kann der Messfehler je nach Rohrwandstärke variieren.

Es ist daher wichtig Kenntnisse über die genaue Rohrwandstärke, als auch über die Materialeigenschaften der Rohrleitung, zu gewinnen, auf welche das Clamp-On-Ultraschall-Durchflussmessgerät angebracht ist. Dabei sind mechanische Biegemoden der Rohrwandung, auch Rayleigh-Lamb-Wellen genannt, von Bedeutung. Eine möglichst gute Wahl des elektrischen Anregungssignals kann zu einer Messung mit geringen Abweichungen führen. Hierfür werden jedoch Kenntnisse der nächstgelegenen Rohrwandresonanzfrequenzen $f_{res}$ benötigt.

Diese Rohrwandresonanzfrequenzen, also diese mechanische Moden, können im Rahmen der vorliegenden Erfindung messtechnisch ermittelt werden.

Das Verfahren zum Ermitteln zumindest einer Rohrwandübertragungsfrequenz umfasst folgende Schritte:

Ermittlung eines Empfangsspektrums $U_{rec}$(f) aus einem Empfangssignal $u_{rec}$(t) nach dem Aussenden eines Ultraschallsignals $u_{ex}$(t) mit Anregungsfrequenz $f_{ex}$;

Ermittlung einer Übertragungsfunktion, welche charakteristisch für die Messstelle ist; und

Ermittlung der zumindest einen Rohrwandresonanzfrequenz oder mehrerer Rohrwandresonanzfrequenzen.

Zu den jeweiligen Verfahrensschritten im Einzelnen:

In einem vorhergehenden Verfahrensschritt erfolgt die Ermittlung einer Übertragungsfunktion des zumindest einen im Clamp-On-Durchflussmessgerätes eingesetzten Ultraschallwandlers. Die Übertragungsfunktion des Ultraschallwandlers im Sinne der vorliegenden Erfindung entspricht der frequenzabhängigen Richtcharakteristik des Ultraschallwandlers. Diese umfasst u.a. die frequenz- und winkelabhängige Amplitude der Wellenausbreitung/-abstrahlung bei einer gewissen Temperatur. Die Winkelabhängigkeit bezieht sich auf den Einfallwinkel des Ultraschallsignals ins Rohr bzw. in die Rohrleitung.

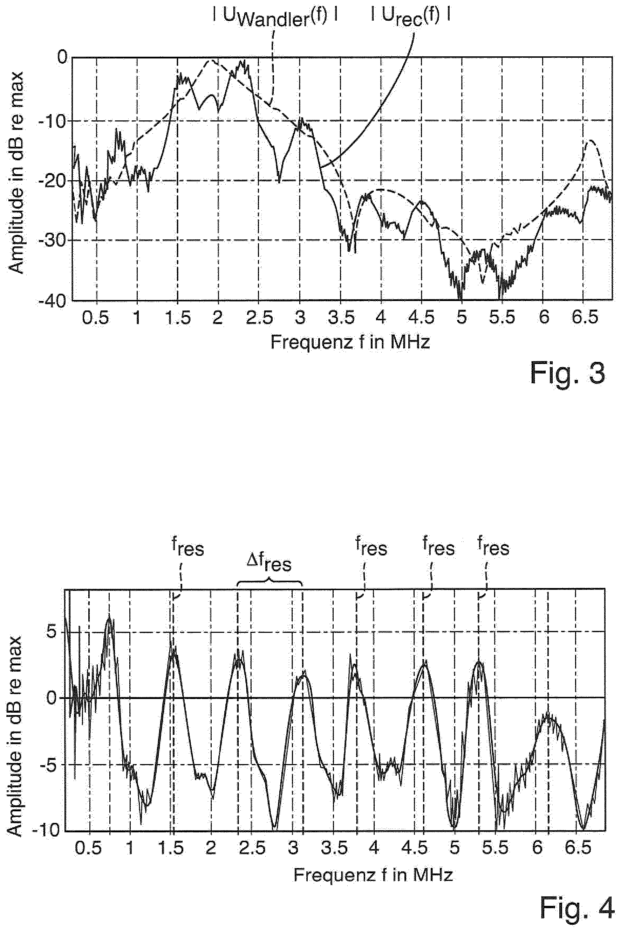

Es versteht sich, dass bei mehreren Ultraschallwandlern für jeden dieser Wandler die Übertragungsfunktion ermittelt werden muss. Diese Funktion ist in Fig. 3 z.B. als ein auf das Maximum normierte Amplitudensignal in Dezibel im Verhältnis zu einer Frequenz in MHz dargestellt. In die Funktion gehen alle das Ultraschallsignal beeinflussenden Faktoren des Ultraschallwandlers, so z.B. die Materialeigenschaften der jeweiligen Anpassungs- und Koppelschichten, die Materialeigenschaften des anregenden Wandlerelements, z.B. eine Piezokeramik und viele weitere Faktoren ein. Die Übertragungsfunktion ändert sich daher bei konstanter Temperatur nicht, unabhängig an welches Rohr der Ultraschallwandler angeschlossen wird.

Somit kann die Übertragungsfunktion eines Ultraschallwandlers werksseitig bestimmt werden und in einem Datenspeicher einer Auswerteeinheit des Clamp-On-Ultraschall-Durchflussmessgerätes hinterlegt werden. Folglich kann die Übertragungsfunktion bereits bei Auslieferung im Messgerät hinterlegt sein. Da allerdings das Medium in der Rohrleitung je nach Anwendung eine unterschiedliche Temperatur aufweist, können auch mehrere Übertragungsfunktionen für mehrere Temperaturbereiche hinterlegt sein. Durch Ermittlung der Temperatur, beispielsweise durch einen im Ultraschallwandler integrierten Temperatursensor, kann das Clamp-On-Ultraschall-Durchflussmessgerät eine entsprechende Übertragungsfunktion für einen Temperaturbereich selbstständig auswählen oder zwischen zwei Übertragungsfunktionen eine Approximation für die ermittelten Temperatur durchführen. Alternativ kann die Temperatur auch geschätzt werden, beispielsweise anhand der Signallaufzeit.

Alternativ kann die Ermittlung der Ultraschallwandler-Übertragungsfunktion auch während der Inbetriebnahme des Ultraschall-Clamp-On Gerätes am Einsatzort des Messgerätes erfolgen. Sofern das Clamp-On Durchflussmessgerät zwei oder mehr Ultraschallwandler aufweist, so können diese aneinandergehalten werden. Dabei werden vorzugsweise die Schalleinkopplungsflächen, mit welchen die Wandler auf dem Rohr bzw. der Rohrleitung aufliegen, aufeinander gelegt. Gegebenenfalls kann ein Zentrieradapter genutzt werden. Die Auswerteeinheit ermittelt anhand eines ausgesandten Signals bzw. Pulses eine Gesamtübertragungsfunktion beider Ultraschallwandler.

Bei einer Messung nach dem Laufzeitdifferenzverfahren mit zwei Ultraschallwandlern müssen im Grunde die logarithmierten Einzelübertragungsfunktionen beider Ultraschallwandler addiert werden. Dieser Schritt der Einzeladdition kann bei Ermittlung der Gesamtfunktion beider Ultraschallwandler vorteilhaft entfallen.

In beiden Fällen, also der werksseitigen Ermittlung als auch der Ermittlung vor Ort, kann besonders bevorzugt eine Korrektur des Amplitudenspektrums des Empfangssignals durch das Anregungssignal $u_{ex}$(t) erfolgen. Das Empfangssignal und das Anregungssignal können bevorzugt durch Fourier-Transformation zur Berechnung umgewandelt werden. Durch Subtraktion der logarithmierten Amplitudenspektren, also dem Anregungsspektrum und dem Empfangsspektrum, erhält man das vom Anregungssignal bereinigte Empfangsspektrum, welches der Übertragungsfunktion entspricht.

In einem Verfahrensschritt erfolgt das Erfassen eines Empfangssignals. Dabei werden zwei Varianten unterschieden.

In einer ersten Variante kann es sich bei dem Empfangssignal um ein herkömmliches Messsignal handeln, wie es im Standard-Messbetrieb von einem Ultraschallwandler empfangen wird. Dabei wird von einem Ultraschallwandler im Sendemodus mit einem Anregungssignal $u_{ex}$(t) angeregt.

Sofern die Durchflussmessung nach dem Dopplerprinzip erfolgt, so kann das Messsignal, als Empfangssignal, von dem gleichen Ultraschallwandler empfangen werden, welcher nach dem Aussenden des Messsignals in den Empfangsmodus umschaltet.

Sofern das Laufzeitdifferenz-Prinzip genutzt wird, so wird das Messsignal, als Empfangssignal, durch einen weiteren Ultraschallwandler im Empfangsmodus empfangen. Das Wandlerelement eines Ultraschallwandlers, z.B. ein Piezokristall, wird dabei mit einer gewissen Anregungsfrequenz $f_{ex}$ zum Aussenden eines Schallwellenpakets angeregt. Dieses breitet sich durch die einzelnen Schichten des Wandlers, z.B. den sogenannten Vorlaufkörper, bis zu einer Einkoppelfläche aus, welche am Rohr anliegt. An dieser Stelle tritt das Schallwellenpaket als Messsignal über die Rohrwandung in das Messmedium ein, durchquert dieses Messmedium, durchquert die Rohrwandung ein zweites Mal

## EP 3 298 359 B1

und wird von dem weiteren Ultraschallwandler empfangen. Aus der Betrachtung dieses Signalpfads wird klar, dass das Messsignal und somit auch die damit verbundenen Messfehler von dem Einfluss der beiden Ultraschallwandler, der Rohrwandung und des Fluids bestimmt werden. Sofern es sich nicht um stark dämpfende Messmedien, wie z.B. Öl, handelt, kann jedoch der Einfluss des Messmediums vernachlässigt werden.

Alternativ kann in einer zweiten Variante des Erfassens eines Empfangssignals II auch ein möglicher störender Einfluss des Messmediums, insbesondere bei der Messung stark ultraschall-dämpfender Fluide, messtechnisch ausgeschlossen werden. Dies erfolgt, indem das Empfangssignal $u_{\text{rec, Körperschall}}(t)$ über eine sogenannte Körperschallmessung erfasst wird. Dies kann besonders bevorzugt bei einer Messung mit zwei Ultraschallwandlern, bei einer 2-Traversen-Messung, wie in Fig. 1 dargestellt, angewandt werden, da sich der vom ersten Ultraschallwandler ausgesandte Schall über die Rohrwandung direkt zum zweiten Ultraschallwandler, welcher sich im Empfangsmodus befindet, ausbreitet. Dabei wird der Schall nicht durchs Fluid beeinflusst, da er über die Rohrwand übertragen wird.

Bei beiden vorgenannten Varianten des Erfassens eines Empfangssignals kann dieses Empfangssignal von dem Einfluss des bekannten Anregungssignals, vorzugsweise analog zum vorhergehenden Verfahrensschritt, vorteilhaft bereinigt werden.

Fig. 3 zeigt ein Amplitudenspektrum des Empfangssignals als durchgehende Linie und ein Amplitudenspektrum der Übertragungsfunktion zweier Ultraschallwandler als Strichlinie.

Es folgt in einem weiteren Verfahrensschritt ein Ermitteln einer Übertragungsfunktion, welche charakteristisch für die Messstelle ist. Dies umfasst zumindest eine Rohrwandübertragungsfunktion, also ein akustisches Spektrum der Amplituden über der Frequenz. Gegebenenfalls kann, insbesondere bei stark schalldämpfenden Medien, auch die Übertragungsfunktion des Messmediums bei der Ermittlung der Übertragungsfunktion, welche charakteristisch für die Messstelle ist, berücksichtigt werden.

Das Amplitudenspektrum mit durchgehender Linie beinhaltet den Einfluss zweier Ultraschallwandler, der Rohrwand und je nach Variante auch den Einfluss des Fluids.

Durch einfache Subtraktion der logarithmierten Spektren erhält man das Übertragungsverhalten des Systems, abzüglich des Einflusses durch das Anregungssignal und der Ultraschallwandler, also die Rohrwandübertragungsfunktion, in welcher ggf. auch die Übertragungsfunktion des Fluids mit eingeht. Dies ist allerdings nur bei der ersten Variante des Erfassens des Empfangssignals der Fall:

$$20\log_{10}|U_{\text{Messstelle}}(f)| = 20\log_{10}(|U_{\text{rec}}(f)|) - 2*20\log_{10}(|U_{\text{Wandler}}(f)|) - 20\log_{10}(|U_{\text{ex}}(f)|) \,,$$

wobei $|U_{\text{rec}}(f)|$ der komplexwertigen Fouriertransformierten eines Empfangssignal $u_{\text{rec}}(t)$ entspricht, welches Empfangssignal über eine Körperschallübertragung durch das Rohr oder über einen Fluidpfad mit n Traversen erfasst wurde, wobei n eine ganze Zahl ist;

wobei $|U_{\text{Wandler}}(f)|$ den Amplituden der genannten frequenz- und winkelabhängigen Richtcharakteristik, für den je Frequenz dominanten Winkel oder Abstrahlwinkel jeweils eines Wandlers, entspricht und

wobei $|U_{\text{ex}}(f)|$ dem Amplitudenspektrum des Anregungssignals $u_{\text{ex}}(t)$ entspricht und

wobei $|U_{\text{Messstelle}}(f)|$ dem Einfluss der Rohrwand oder dem Einfluss aus Rohrwand und Fluiddämpfung entspricht.

Die Durchführung dieser Berechnung ermöglicht zusätzlich die Bestimmung von Fluid-Eigenschaften anhand der frequenzabhängigen Dämpfung. Die Stärke dieser Dämpfung ist bei hochviskosen Fluiden (z. B. Öle) charakteristisch und legt die Bestimmung der dynamischen Viskosität nahe. Weißt das Fluid keine starke frequenzabhängige Dämpfung auf (z. B. Wasser), dann entspricht bei beiden Varianten das berechnete Spektrum der Messstelle der Rohrwandübertragungsfunktion $|U_{\text{Rohrwand}}(f)|$.

Fig. 4 zeigt eine entsprechende Übertragungsfunktion, welche für die Messstelle charakteristisch ist. Die Maxima des Amplitudenspektrums entsprechen sogenannten Rohrwandresonanzfrequenzen. Die Bestimmung dieser Rohrwandfrequenzen, z.B. durch Ablesen, kann als weiterer Verfahrensschritt, also der Ermittlung der zumindest einen Rohrwandresonanzfrequenz oder mehrerer Rohrwandresonanzfrequenzen verstanden werden.

Dies gilt auch bei stark dämpfenden Fluiden, sofern die Fluiddämpfung monoton steigend/oder fallend ist, was bei Flüssigkeiten zumeist der Fall ist.

Nachfolgend werden Anwendungsfälle näher erörtert, in welchen die nach dem erfindungsgemäßen Verfahren ermittelten Rohrwandresonanzfrequenzen eingesetzt werden können.

Die Rohrwandresonanzen sind charakteristisch für die Materialeigenschaften der Rohrleitung. Sie können zur Messfehlerkorrektur bei der Ultraschall-Durchflussmessung eingesetzt werden.

Die Rohrwandresonanzfrequenzen können auch genutzt werden um Veränderungen an der Messstelle, wie

6

z.B. Temperatureinfluss, Ablagerungen, Hydroabrasion und dergleichen, an oder in der Rohrwandung festzustellen.

Zudem kann anhand der Rohrwandresonanzfrequenzen eine Überprüfung erfolgen, ob die dem Benutzer bekannten Werte für Rohrwandstärke und Rohrmaterial zutreffend sind. Ebenso kann anhand der Rohrwandresonanzfrequenzen die Berechnung der tatsächlichen Rohrwandstärke, bei Verwendung der eingegebenen Materialparameter, erfolgen.

Die Rohrwandstärke unterliegt an der Messstelle meist einer gewissen Unsicherheit, da dem Kunden die Messung der genauen geometrischen Abmessung im Vergleich zum Rohraußendurchmesser in der Regel nicht möglich ist. Diese Unsicherheit geht direkt in die Berechnung der Strömungsgeschwindigkeit und damit in den Messfehler ein. Anhand der Rohrwandresonanzfrequenzen und des Rohraußendurchmessers kann der Rohrinnendurchmesser ermittelt werden.

Es gilt gemäß der Veröffentlichung "Study of Lamb waves based upon the frequency and angular derivatives of the phase of the reflection coefficient" von Lenoir (Journal of the Acoustical Society of America, Vol. 94, No. 330, 1993) folgender Zusammenhang:

$$\Delta f_{\text{res}} = \frac{c_{\text{t,Rohr}}}{2\, d_{\text{w}} \sqrt{1 - \left[\left(\frac{c_{\text{t,Rohr}}}{c_{\text{Fluid}}}\right)\sin\alpha_{\text{f}}\right]^2}},$$

wobei die Rohrwandstärke $d_{\text{w}}$, der Ausbreitungswinkel des Ultraschallsignals im Fluid $\alpha_{\text{f}}$, die longitudinale Schallgeschwindigkeit im Fluid $c_{\text{Fluid}}$ und die transversale Schallgeschwindigkeit $c_{\text{t,Rohr}}$ innerhalb der Rohrwandung bei bekannter Temperatur ist.

Rohrwandeigenschaften im Sinne der vorliegenden Erfindung sind u.a. die transversale Schallgeschwindigkeit und/oder die longitudinale Schallgeschwindigkeit.

Durch Umstellen der Gleichung nach $d_{\text{w}}$ kann bei bekanntem Fluid-Winkel, Fluid-Schallgeschwindigkeit und bei bekannten Rohrwandeigenschaften, insbesondere bei bekannter transversaler Schallgeschwindigkeit, die Rohrwandstärke bestimmt werden. Mit dem Außendurchmesser der Rohrleitung und der Rohrwandstärke kann sodann ein exakter Innendurchmesser der Rohrleitung an der Messstelle zur Durchflussermittlung berechnet werden.

Alternativ können auch die Rohrwandeigenschaften bei bekannter Rohrwandstärke ermittelt werden.

Aus den Rohrwandeigenschaften kann z.B. anhand durch Sollwertvergleich überprüft werden, ob es sich tatsächlich um das angegebene Rohrmaterial handelt. Gleiches gilt für die Rohrwandstärke, z.B. bei fortschreitender Abrasion, durch Vergleich mit zeitlich vorangegangenen ermittelten Rohrwandresonanzfrequenzen.

Die vorgeschlagene Methode könnte auch Grundlage eines neuartigen Identifikationsgeräts sein, das durch Analyse von Körperschall zielgerichtet Rohrwandparameter ermittelt.

Dabei besteht ein beispielhafter Aufbau aus zwei Winkelprüfköpfen, die in einem Gehäuse in einem definierten Abstand, auf einer zur Rohrachse parallelen Geraden auf das Rohr montiert werden können, analog zu einer Zwei-Traversenanordnung zweier Ultraschallwandler.

Wird dieses Gerät auf eine Rohrwand mit unbekannten Geometrie-/Materialeigenschaften aufgesetzt, so ermittelt ein daran angeschlossener Messumformer, basierend auf der oben beschriebenen Idee, die Rohrwand-Resonanzfrequenzen. Der definierte Abstand zwischen den beiden Wandlern erlaubt zusätzlich über eine Laufzeitmessung die Bestimmung der RohrwandMaterialeigenschaften durch Auswertung der Schallgeschwindigkeit.

Eine mögliche Vorgehensweise zur Bestimmung der Rohrwandmaterialeigenschaften besteht in der Lösung eines inversen Problems, wie es beispielsweise in "Inversion of leaky Lamb wave data by simplex algorithm" von Karim, Mal und Bar-Cohen (Journal of the Acoustical Society of America, Vol. 88, No. 1, 1990) für die Untersuchung an Platten beschrieben ist. Dazu werden die direkt über die Rohrwand empfangenen Signale $u_{\text{rec,Körperschall}}(t)$ ausgewertet und mit Modellrechnungen verglichen. Die Parameter, insbesondere Materialeigenschaften, des Modells werden solange angepasst, bis die Abweichung zwischen vom Modell berechneten Signal und gemessenem Empfangssignal minimal ist.

Durch das Identifikationsgerät können daher sowohl die Rohrwandstärke als auch die Rohrwandeigenschaften ermittelt werden.

Alternativ zur Addition/Subtraktion von logarithmierten Größen kann auch die Multiplikation/Division von nicht-logarithmierten Größen äquivalent verwendet werden.

**Patentansprüche**

1. Verfahren zur Ermittlung zumindest einer Rohrwandresonanzfrequenz einer Rohrleitung im Bereich einer Messstelle mittels eines Feldgerätes der Prozessmesstechnik mit zumindest einem ersten Ultraschallwandler, welcher an der Messstelle an der Rohrleitung festgelegt ist, umfassend die folgenden Schritte:

- Ermittlung eines Empfangsspektrums $U_{rec}$(f) aus einem Empfangssignal $u_{rec}$(t) nach dem Aussenden eines Ultraschallsignals;
- Ermittlung einer zweiten Übertragungsfunktion $U_{Messstelle}$(f) aus einer ersten Übertragungsfunktion $U_{wandler}$(f) zumindest des ersten oder mehrerer im Bereich der Messstelle befindlichen Ultraschallwandler und dem Empfangsspektrum $U_{rec}$(f), wobei die zweite Übertragungsfunktion $U_{Messstelle}$(f) charakteristisch für die Messstelle ist; und
- Ermittlung der zumindest einen Rohrwandresonanzfrequenz $f_{res}$, insbesondere mehrerer Resonanzfrequenzen, im Bereich der Messstelle durch Auswertung der zweiten Übertragungsfunktion $U_{Messstelle}$(f).

2. Verfahren nach Anspruch 1, **dadurch gekennzeichnet, dass** ein Bereitstellen der ersten Übertragungsfunktion $U_{wandler}$(f) einen temperatur- und/oder winkelunabhängigen Frequenzverlauf umfasst, wobei die Winkelunabhängigkeit sich auf den Einfallswinkel des Ultraschallsignals vom Ultraschallwandler in die Rohrleitung bezieht.

3. Verfahren nach Anspruch 1 oder 2, **dadurch gekennzeichnet, dass** das Feldgerät der Prozessmesstechnik zumindest einen Datenspeicher aufweist und wobei die erste Übertragungsfunktion $U_{wandler}$(f) des ersten oder der mehreren Ultraschallwandler abrufbar auf dem Datenspeicher hinterlegt ist.

4. Verfahren nach einem der vorhergehenden Ansprüche, **dadurch gekennzeichnet, dass** mehrere erste Übertragungsfunktionen $U_{wandler}$(f) für mehrere Temperaturen oder Temperaturbereiche bereitgestellt sind, insbesondere in einem Datenspeicher hinterlegt sind.

5. Verfahren nach einem der vorhergehenden Ansprüche, **dadurch gekennzeichnet, dass** ein Bereitstellen der Übertragungsfunktionen $U_{wandler}$(f) von zwei Ultraschallwandlern durch Ermittlung einer Gesamtübertragungsfunktion erfolgt, indem die Ultraschallwandler an ihren Kopplungsflächen miteinander verbunden, insbesondere aneinander gepresst, werden.

6. Verfahren nach einem der vorhergehenden Ansprüche, **dadurch gekennzeichnet dass** zur Ermittlung eines Empfangsspektrums $U_{rec}$(f) aus einem Empfangssignal $u_{rec}$(t) nach dem Aussenden eines Ultraschallsignals

ein Aussenden eines Ultraschallsignals durch ein schallerzeugendes Element des ersten Ultraschallwandlers erfolgt,
wobei das Signal zumindest durch den Ultraschallwandler, zumindest zweimal durch eine Rohrwandung der Rohrleitung, durch das Messmedium und ein zweites Mal durch den ersten oder durch einen zweiten Ultraschallwandler propagiert, und durch das schallerzeugende Element des ersten Ultraschallwandlers oder durch ein schallerzeugendes Element des zweiten Ultraschallwandlers als Empfangssignal empfangen und in ein Empfangsspektrum $U_{rec}$(f) umgewandelt wird.

7. Verfahren nach einem der vorhergehenden Ansprüche, **dadurch gekennzeichnet, dass** zur Ermittlung eines Empfangsspektrums $U_{rec}$(f) aus einem Empfangssignal $u_{rec}$(t) nach dem Aussenden eines Ultraschallsignals

ein Aussenden eines Ultraschallsignals durch ein schallerzeugendes Element des ersten Ultraschallwandlers erfolgt,
wobei das Signal ausschließlich durch den Ultraschallwandler, durch eine Rohrwandung der Rohrleitung und durch einen zweiten Ultraschallwandler propagiert, und
durch ein schallerzeugendes Element eines zweiten Ultraschallwandlers als Empfangssignal empfangen und in ein Empfangsspektrum $U_{rec}$(f) umgewandelt wird.

8. Verfahren nach einem der vorhergehenden Ansprüche, **dadurch gekennzeichnet, dass** die Ermittlung der zweiten Übertragungsfunktion $U_{Messstelle}$(f), die charakteristisch für die Messstelle ist, durch Subtraktion der logarithmierten Amplitudenspektren der ersten Übertragungsfunktion $U_{wandler}$(f) zumindest des ersten oder mehrerer im Bereich der Messstelle befindlichen Ultraschallwandler und des Empfangsspektrums $U_{rec}$(f) erfolgt.

9. Verfahren nach einem der vorhergehenden Ansprüche, **dadurch gekennzeichnet, dass** die Ermittlung der Rohrwandresonanzfrequenzen $f_{res}$ im Bereich der Messstelle durch Ermittlung der Amplitudenmaxima des Amplitudenspektrums der zweiten Übertragungsfunktion $U_{Messstelle}$(f) erfolgt.

10. Clamp-On-Ultraschall-Durchflussmessgerät umfassend zumindest einen ersten Ultraschallwandler und eine Auswerteeinheit, an welche der erste Ultraschallwandler angeschlossen ist und welche eingerichtet ist, das Verfahren nach Anspruch 1 zu betreiben.

**11.** Clamp-On-Ultraschall-Durchflussmessgerät nach Anspruch 10, **dadurch gekennzeichnet, dass** die Auswerteeinheit ausgerüstet ist zur Ermittlung des Durchflusses und/oder der Durchflussgeschwindigkeit nach dem Laufzeitdifferenzverfahren.

**12.** Clamp-On-Ultraschall-Durchflussmessgerät nach Anspruch 10 oder 11, **dadurch gekennzeichnet, dass** die Auswerteeinheit ausgerüstet ist, basierend auf der zumindest einen Rohrwandresonanzfrequenz ein Anregungssignal für den ersten Ultraschallwandler, insbesondere eine Frequenz des Anregungssignals, einzustellen.

**13.** Verfahren zur Ermittlung eines Durchflusses oder der Durchflussgeschwindigkeit durch ein Clamp-On-Ultraschall-Durchflussmessgerät, **dadurch gekennzeichnet, dass** Rohrwandresonanzfrequenzen bei der Ermittlung des Durchflusses berücksichtigt werden, wobei die Rohrwandresonanzfrequenzen $f_{res}$ nach dem Verfahren nach Anspruch 1 ermittelt wurden.

**14.** Verfahren zur Ermittlung von Veränderungen einer Messstelle, an welcher ein Clamp-On-Ultraschall-Durchflussmessgerät befestigt ist, **dadurch gekennzeichnet, dass** eine Veränderung der Messstelle angezeigt wird, sofern die ermittelten Rohrwandresonanzfrequenzen sich zeitlich bezüglich der Amplitude und/oder der Lage im Spektrum ($|U_{Messstelle}(f)|$) ändern und dabei einen Sollwert über- und/oder unterschreiten, wobei die Rohrwandresonanzfrequenzen nach dem Verfahren nach Anspruch 1 ermittelt wurden.

**15.** Identifikationsgerät zur Ermittlung von Rohrwandparametern, vorzugsweise der Rohrwanddicke $d_w$ und/oder der Rohrwandmaterialeigenschaften, insbesondere der longitudinalen und/oder transversalen Schallgeschwindigkeit im Rohrwandmaterial, **dadurch gekennzeichnet, dass** das Identifikationsgerät zumindest einen Ultraschallwandler aufweist und eine Auswerteeinheit, welche eingerichtet ist das Verfahren nach Anspruch 1 auszuführen und aus den ermittelten Rohrwandresonanzfrequenzen die Rohrwandstärke und/oder das Rohrwandmaterial zu ermitteln.

**Claims**

**1.** Procedure to determine at least a pipe wall resonance frequency of a pipe in the area of a measuring point using a field device used in process measuring technology with at least a first ultrasonic transducer, wherein said transducer is fixed on the pipe at the measuring point, wherein said procedure comprises the following steps:

- Determination of a reception spectrum $U_{rec}(f)$ from a reception signal $u_{rec}(t)$ following the emission of an ultrasonic signal;
- Determination of a second transmission function $U_{Measuring\ point}(f)$ from a first transmission function $U_{transducer}(f)$ at least of the first or several of the ultrasonic transducers situated in the area of the measuring point and the reception spectrum $U_{rec}(f)$, wherein the second transmission function $U_{Measuring\ point}(f)$ is characteristic for the measuring point; and
- Determination of the at least one pipe wall resonance frequency $f_{res}$, particularly of multiple resonance frequencies, in the area of the measuring point by evaluating the second transmission function $U_{Measuring\ point}(f)$.

**2.** Procedure as claimed in Claim 1, **characterized in that** the provision of the first transmission function $U_{transducer}(f)$ comprises a frequency curve that is independent of the temperature and/or angle, wherein the angular independence refers to the angle of incidence of the ultrasonic signal of the ultrasonic transducer in the pipe.

**3.** Procedure as claimed in Claim 1 or 2, **characterized in that** the field device used in process measuring technology comprises at least a data memory and wherein the first transmission function $U_{transducer}(f)$ of the first or multiple ultrasonic transducers is saved in a retrievable manner on the data memory.

**4.** Procedure as claimed in one of the previous claims, **characterized in that** several first transmission functions $U_{transducer}(f)$ are provided for multiple temperatures or temperature ranges, and are particularly saved in a data memory.

**5.** Procedure as claimed in one of the previous claims, **characterized in that** the transmission functions $U_{transducer}(f)$ of two ultrasonic transducers are provided by determining a total transmission function, **in that** the ultrasonic transducers are connected to one another at their coupling surfaces, and are particularly pressed against one another.

**6.** Procedure as claimed in one of the previous claims, **characterized in that**, in order to determine a reception spectrum $U_{rec}$(f) from a reception signal $u_{rec}$(t), following the emission of an ultrasonic signal,

an ultrasonic signal is emitted by a sound-generating element of the first ultrasonic transducer, wherein the signal propagates at least through the ultrasonic transducer, at least twice through a pipe wall, through the medium under measurement and a second time through the first or through a second ultrasonic transducer, and is received as a reception signal by the sound-generating element of the first ultrasonic transducer or by a sound-generating element of the second ultrasonic transducer and converted to a reception spectrum $U_{rec}$(f).

**7.** Procedure as claimed in one of the previous claims, **characterized in that**, in order to determine a reception spectrum $U_{rec}$(f) from a reception signal $u_{rec}$(t), following the emission of an ultrasonic signal,

an ultrasonic signal is transmitted by a sound-generating element of the first ultrasonic transducer, wherein the signal propagates exclusively through the ultrasonic transducer, through a pipe wall and through a second ultrasonic transducer, and is received as a reception signal by a sound-generating element of a second ultrasonic transducer and is converted to a reception spectrum $U_{rec}$(f).

**8.** Procedure as claimed in one of the previous claims, **characterized in that** the second transmission function $U_{Measuring\ point}$(f), which is characteristic of the measuring point, is determined by subtracting the logarithmic amplitude spectra of the first transmission function $U_{transducer}$(f) at least of the first or multiple ultrasonic transducers located in the area of the measuring point and of the reception spectrum $U_{rec}$(f).

**9.** Procedure as claimed in one of the previous claims, **characterized in that** the pipe wall resonance frequencies $f_{res}$ in the area of the measuring point is determined by determining the amplitude maxima of the amplitude spectrum of the second transmission function $U_{Measuring\ point}$(f).

**10.** Clamp-on ultrasonic flowmeter comprising at least a first ultrasonic transducer and an evaluation unit to which the first ultrasonic transducer is connected and which is configured to execute the procedure as claimed in Claim 1.

**11.** Clamp-on ultrasonic flowmeter as claimed in Claim 10, **characterized in that** the evaluation unit is designed to determine the flow and/or the flow velocity according to the transit time difference procedure.

**12.** Clamp-on ultrasonic flowmeter as claimed in Claim 10 or 11, **characterized in that** the evaluation unit is equipped to set an excitation signal for the first ultrasonic transducer, particularly a frequency of the excitation signal, on the basis of the at least one pipe wall resonance frequency.

**13.** Procedure designed to determine a flow or the flow velocity through a clamp-on ultrasonic flowmeter, **characterized in that** pipe wall resonance frequencies are taken into consideration in the determination of the flow, wherein the pipe wall resonance frequencies $f_{res}$ have been determined using the procedure as claimed in Claim 1.

**14.** Procedure designed to determine changes to a measuring point to which a clamp-on ultrasonic flowmeter is attached, **characterized in that** a change in the measuring point is displayed as soon as the determined pipe wall resonance frequencies change over time in relation to the amplitude and/or the position in the spectrum ($|U_{Measuring\ point}$(f)$|$) and exceed and/or drop below a target value, wherein the pipe wall resonance frequencies have been determined according to the procedure as claimed in Claim 1.

**15.** Identification device for determining pipe wall parameters, preferably the pipe wall thickness $d_w$ and/or the pipe wall material properties, particularly the longitudinal and/or transversal sound velocity in the pipe wall material, **characterized in that** the identification unit has at least an ultrasonic transducer and an evaluation unit, which is designed to perform the procedure as claimed in Claim 1 and to determine the pipe wall thickness and/or the pipe wall material from the pipe wall resonance frequencies determined.

**Revendications**

**1.** Procédé destiné à la détermination d'au moins une fréquence de résonance de la paroi d'une conduite dans la zone d'un point de mesure au moyen d'un appareil de terrain de la technique de mesure de process avec au moins un premier convertisseur à ultrasons, lequel convertisseur est fixé à la conduite au point de mesure, lequel procédé comprend les étapes suivantes :

- Détermination d'un spectre de réception $U_{rec}(f)$ à partir d'un signal de réception $u_{rec}(t)$ après l'émission d'un signal ultrasonore ;
- Détermination d'une deuxième fonction de transfert $U_{Point\ de\ mesure}(f)$ à partir d'une première fonction de transfert $U_{convertisseur}(f)$ d'au moins le premier ou de plusieurs convertisseurs à ultrasons situés dans la zone du point de mesure et du spectre de réception $U_{rec}(f)$, la deuxième fonction de transfert $U_{Point\ de\ mesure}(f)$ étant caractéristique du point de mesure ; et
- Détermination de l'au moins une fréquence de résonance de la paroi de conduite $f_{res}$, notamment de plusieurs fréquences de résonance, dans la zone du point de mesure par évaluation de la deuxième fonction de transfert $U_{Point\ de\ mesure}(f)$.

2. Procédé selon la revendication 1, **caractérisé en ce qu'**une mise à disposition de la première fonction de transfert $U_{convertisseur}(f)$ comprend une courbe de fréquence indépendante de la température et/ou de l'angle, l'indépendance angulaire se rapportant à l'angle d'incidence du signal ultrasonore du convertisseur à ultrasons dans la conduite.

3. Procédé selon la revendication 1 ou 2, **caractérisé en ce que** l'appareil de terrain de la technique de mesure de process comprend au moins une mémoire de données et procédé pour lequel la première fonction de transfert $U_{convertisseur}(f)$ du premier ou des plusieurs convertisseurs à ultrasons est stockée de manière à pouvoir être appelée dans la mémoire de données.

4. Procédé selon l'une des revendications précédentes, **caractérisé en ce que** plusieurs premières fonctions de transfert $U_{convertisseur}(f)$ sont mises à disposition pour plusieurs températures ou gammes de températures, lesquelles fonctions sont notamment stockées dans une mémoire de données.

5. Procédé selon l'une des revendications précédentes, **caractérisé en ce qu'**une mise à disposition des fonctions de transfert $U_{convertisseur}(f)$ de deux convertisseurs à ultrasons s'effectue par détermination d'une fonction de transfert globale, en reliant les convertisseurs à ultrasons entre eux au niveau de leurs surfaces de couplage, notamment en les pressant l'un contre l'autre.

6. Procédé selon l'une des revendications précédentes, **caractérisé en ce que**, pour déterminer un spectre de réception $U_{rec}(f)$ à partir d'un signal de réception urec(t), après l'émission d'un signal ultrasonore,

on procède à une émission d'un signal ultrasonore par un élément générateur de son du premier convertisseur à ultrasons,
le signal étant transmis au moins par le convertisseur à ultrasons, se propageant au moins deux fois à travers une paroi de la conduite, à travers le produit mesuré et une deuxième fois à travers le premier ou un deuxième convertisseur à ultrasons, et étant reçu comme signal de réception par l'élément générateur de son du premier convertisseur à ultrasons ou par un élément générateur de son du deuxième convertisseur à ultrasons et étant converti en un spectre de réception $Urec(f)$.

7. Procédé selon l'une des revendications précédentes, **caractérisé en ce que**, pour déterminer un spectre de réception $U_{rec}(f)$ à partir d'un signal de réception urec(t), une émission d'un signal ultrasonore est effectuée après l'émission d'un signal ultrasonore par un élément générateur de son du premier convertisseur à ultrasons,
le signal se propageant exclusivement à travers le convertisseur à ultrasons, à travers une paroi de la conduite et à travers un deuxième convertisseur à ultrasons, et étant reçu comme signal de réception par un élément générateur de son d'un deuxième convertisseur à ultrasons et étant converti en un spectre de réception $U_{rec}(f)$.

8. Procédé selon l'une des revendications précédentes, **caractérisé en ce que** la détermination de la deuxième fonction de transfert $U_{Point\ de\ mesure}(f)$, qui est caractéristique du point de mesure, s'effectue par soustraction des spectres d'amplitude logarithmiques de la première fonction de transfert $U_{convertisseur}(f)$ d'au moins le premier ou de plusieurs convertisseurs à ultrasons se trouvant dans la zone du point de mesure et du spectre de réception $U_{rec}(f)$.

9. Procédé selon l'une des revendications précédentes, **caractérisé en ce que** la détermination des fréquences de résonance de la paroi de conduite $f_{res}$ dans la zone du point de mesure s'effectue par détermination des maxima d'amplitude du spectre d'amplitude de la deuxième fonction de transfert $U_{Point\ de\ mesure}(f)$.

**10.** Débitmètre à ultrasons clamp-on comprenant au moins un premier convertisseur à ultrasons et une unité d'exploitation, unité à laquelle est raccordé le premier convertisseur à ultrasons et laquelle unité est conçue pour faire fonctionner le procédé selon la revendication 1.

**11.** Débitmètre à ultrasons clamp-on selon la revendication 10, **caractérisé en ce que** l'unité d'exploitation est conçue pour déterminer le débit et/ou la vitesse d'écoulement selon le procédé de différence de temps de transit.

**12.** Débitmètre à ultrasons clamp-on selon la revendication 10 ou 11, **caractérisé en ce que** l'unité d'exploitation est équipée pour régler un signal d'excitation pour le premier convertisseur à ultrasons, notamment une fréquence du signal d'excitation, sur la base de l'au moins une fréquence de résonance de la paroi de conduite.

**13.** Procédé destiné à la détermination d'un débit ou de la vitesse d'écoulement par un appareil de mesure de débit à ultrasons clamp-on, **caractérisé en ce que** des fréquences de résonance de la paroi de conduite sont prises en compte lors de la détermination du débit, les fréquences de résonance de la paroi de conduite $f_{res}$ ayant été déterminées selon le procédé de la revendication 1.

**14.** Procédé destiné à la détermination des modifications d'un point de mesure auquel est fixé un débitmètre à ultrasons clamp-on, **caractérisé en ce qu'**une modification du point de mesure est affichée, dans la mesure où les fréquences de résonance de la paroi de conduite déterminées varient dans le temps par rapport à l'amplitude et/ou à la position dans le spectre ($|U_{\text{Point de mesure}}(f)|$) et sont alors supérieures et/ou inférieures à une valeur de consigne, les fréquences de résonance de la paroi de conduite ayant été déterminées selon le procédé de la revendication 1.

**15.** Appareil d'identification destiné à la détermination des paramètres de la paroi de conduite, de préférence de l'épaisseur $d_w$ de la paroi de conduite et/ou des propriétés du matériau de la paroi de conduite, notamment la vitesse longitudinale et/ou transversale du son dans le matériau de la paroi de conduite, **caractérisé en ce que** l'appareil d'identification comporte au moins un convertisseur à ultrasons et une unité d'exploitation, laquelle unité est conçue pour exécuter le procédé selon la revendication 1 et pour déterminer l'épaisseur de la paroi de conduite et/ou le matériau de la paroi de conduite à partir des fréquences de résonance de la paroi de conduite déterminées.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19818053 A1

- US 20120055264 A1

**In der Beschreibung aufgeführte Nicht-Patentliteratur**

- *Journal of the Acoustical Society of America,* 1993, vol. 94 (330

- *Journal of the Acoustical Society of America,* 1990, vol. 88 (1